(19) Europäisches Patentamt
European Patent Office
Office européen des brevets

(11) EP 3 732 809 B1

(12) FASCICULE DE BREVET EUROPEEN

(45) Date de publication et mention
de la délivrance du brevet:
**07.06.2023 Bulletin 2023/23**

(21) Numéro de dépôt: **18842772.8**

(22) Date de dépôt: **18.12.2018**

(51) Classification Internationale des Brevets (IPC):
*H04L 1/06* (2006.01)    *H04B 3/54* (2006.01)
*H04L 1/00* (2006.01)

(52) Classification Coopérative des Brevets (CPC):
**H04B 3/54; H04L 1/0003; H04L 1/0009;
H04L 1/0015; H04L 1/06**

(86) Numéro de dépôt international:
**PCT/FR2018/053388**

(87) Numéro de publication internationale:
**WO 2019/129951 (04.07.2019 Gazette 2019/27)**

(54) **PROCÉDÉ DE COMMUNICATION À DÉBIT VARIABLE AVEC SÉLECTION D'UNE INTERFACE DE TRANSMISSION ET DISPOSITIF CORRESPONDANT**

VERFAHREN ZUR KOMMUNIKATION MIT VARIABLER BITRATE MIT AUSWAHL EINER ÜBERTRAGUNGSSCHNITTSTELLE UND ZUGEHÖRIGE VORRICHTUNG

METHOD OF VARIABLE-BITRATE COMMUNICATION WITH SELECTION OF A TRANSMISSION INTERFACE AND CORRESPONDING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.12.2017 FR 1763272**

(43) Date de publication de la demande:
**04.11.2020 Bulletin 2020/45**

(73) Titulaire: **Orange
92130 Issy-les-Moulineaux (FR)**

(72) Inventeurs:
• **AL BECHLAWI, Carole
92326 Châtillon Cedex (FR)**
• **SIAUD, Isabelle
92326 Châtillon Cedex (FR)**
• **ULMER MOLL, Anne-Marie
92326 Châtillon Cedex (FR)**

(56) Documents cités:
**EP-A1- 1 515 471    EP-A1- 2 517 365
EP-B1- 1 515 471    EP-B1- 2 517 365
FR-A1- 3 007 919**

**Description**

**Domaine de l'invention**

La présente invention se rapporte au domaine des télécommunications. Au sein de ce domaine, l'invention se rapporte plus particulièrement aux communications dites numériques dont le débit utile peut varier. Nous désignons par débit utile le débit associé aux bits d'information transmis sur la couche PHY d'au moins une interface de transmission. Les communications numériques comprennent en particulier les communications sans fil ; elles comprennent aussi par exemple les communications filaires. Le support de transmission des communications est couramment appelé canal de transmission ou de propagation, à l'origine en référence à un canal aérien et par extension en référence à tout canal.

A titre d'exemple, les systèmes filaires peuvent avoir une interface de transmission de type CPL (Courant Porteur en Ligne ou PLT (Power Line Transmission)) avec un canal de transmission filaire qui emprunte le réseau électrique ou une interface de transmission optique avec un canal de transmission qui peut aussi bien être filaire (fibre optique) qu'aérien en sortie d'une diode par exemple. Les systèmes sans fil ont une interface dite de transmission RF lorsqu'il s'agit d'un système de télécommunication avec une transmission aérienne d'un signal appartenant à une bande radio (par exemple, de type GSM, UMTS, 802.11x, 802.16e).

**Art antérieur**

Les systèmes de télécommunication sont généralement structurés selon une architecture qui répond à une organisation en couches selon le modèle de communication OSI, normalisé par l'ISO (International Organization for Standardization selon la terminologie anglosaxonne).

Le modèle de communication OSI définit la gestion de service de transmission de données au moyen de sept couches protocolaires superposées : la couche physique (couche 1), la couche liaison de données (couche 2), la couche réseau (couche 3), la couche transport (couche 4), la couche session (couche 5), la couche présentation (couche 6) et la couche application (couche 7).

Les trois premières couches 1, 2 et 3, dites couches basses, sont relatives à la mise en oeuvre de la connexion et au transport des données. Les quatre couches suivantes, dites couches hautes, sont responsables du traitement des données. Cette organisation permet donc au système de télécommunication d'implémenter le service associé aux données traitées.

Les protocoles de liaison de données répondent aux demandes de services provenant de la couche réseau et réalisent leur fonction par l'envoi de demandes de services à la couche physique.

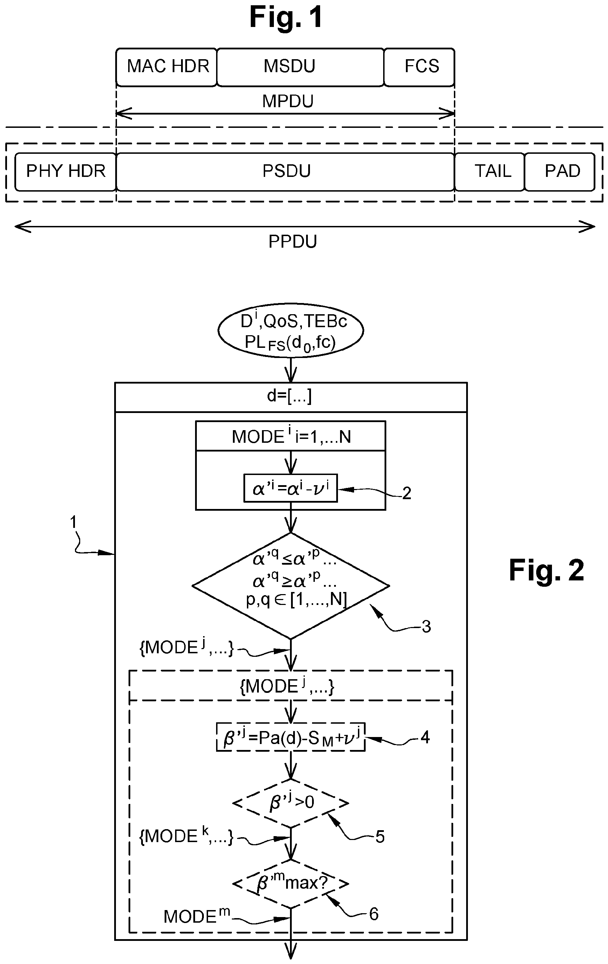

Les échanges de signalisation entre deux entités de communication séparées par un canal de transmission sont pilotés au niveau de la couche liaison de données au moyen d'une structure de trames, dites trames MAC (pour "Medium Access Control" selon la terminologie anglosaxonne). En référence à la figure 1, les trames MAC sont encapsulées dans une structure de trames, dite trames physiques PPDU (« PHY Protocol Data Unit » selon la terminologie anglosaxonne) par la couche physique PHY avant leur transmission par le canal de transmission. Une telle trame physique comprend un entête PHY HDR, un champ de données PSDU (« PHY Service Data Unit » selon la terminologie anglosaxonne), un champ queue TAIL et un champ de bourrage PAD. Le champ de données PSDU est la trame MPDU (« MAC Protocol Data Unit » selon la terminologie anglosaxonne) dite MAC. La trame MPDU comprend un entête MAC HDR, un champ de données MSDU (« MAC Service Data Unit » selon la terminologie anglosaxonne) et un champ FCS (« Frame Check Sequence » selon la terminologie anglosaxonne) de vérification de trame.

Les systèmes de télécommunication s'orientent vers une flexibilité du mécanisme de transmission PHY/MAC dans le but de délivrer un débit donné à une distance émetteur-récepteur d avec la garantie d'une qualité de service QoS (Quality of Service selon la terminologie anglosaxonne) décrite au niveau de la couche PHY par un TEB (Taux d'Erreur Binaire) cible (TEBc) optimale. Ces systèmes flexibles comprennent une ou plusieurs interfaces de transmission.

Une interface de transmission comprend la couche physique PHY qui englobe un ou plusieurs modes de transmission et les protocoles de transmission propres (MAC) pour mettre en oeuvre ces modes de transmission.

Nous désignons par mode de transmission dans la suite du document une technique de transmission (OFDM, technique MIMO (mapping spatial, Spatial Division Multiplex, etc), étalement, etc.) associée à un schéma de codage correcteur d'erreur (codage binaire à signal CBS) et de modulation numérique, schéma désigné par MCS (Modulation and Coding Scheme, typiquement 16-QAM 1/3, 64-QAM ¾, etc) ainsi qu'à une taille de bande de transmission Bw et à une fréquence porteuse de transmission (optique, RF, etc, éventuellement de valeur nulle) permettant de générer le signal dans une bande du spectre dédiée à sa transmission (bande de base, bande radio, bande infrarouge, bande optique) délivrant un débit.

La notion de débit est large et nécessite de préciser le contexte.

On distingue le débit $D$ physique (PHY data rate) et le débit moyen $D_{moy}$ (Throughput).

Le débit D physique est le débit maximal pour un mode de transmission donné. Les paramètres affectant le débit D physique sont : le schéma de modulation et codage, la largeur de bande, le nombre de flux spatiaux, la fréquence porteuse. Ce débit est calculé sur le champ de données, usuellement désigné selon la terminologie anglosaxonne par data payload ou frame payload, intégré dans une unité PSDU (Physical Service Data Unit) et il ne tient pas compte du format de trame au niveau de la couche MAC.

Le débit moyen $D_{moy}$ est la quantité d'information délivrée par un mode de transmission donné durant une certaine période de temps. Le calcul du débit moyen $D_{moy}$ est effectué au niveau de la couche physique (trame PPDU) et prend en compte plusieurs facteurs dont les conditions du canal, le type de protocole employé (TCP/UDP), le temps de non transmission des données lié aux mécanismes d'acquittement et de non acquittements lors de la retransmission des données (Stop And Wait [SAW], Sélective Repeat [SR] *(*Tanenbaum, Andrew S., ' Computer Networks ', 4th ed. ISBN 0-13-066102-3*)*, les retransmissions de paquets associés aux mécanismes HARQ Hybrid Automatic Repeat re-Quest de type Chase Combining et Incremental Redundancy,(A.M. Cipriano, P. Gagneur, G. Vivier and S. Sezginer, ' Overview of ARQ and HARQ in beyond 3G', 2010, PIMRC workshop), etc.

Ainsi, pour délivrer un certain débit avec une QoS à la distance d, il est possible de sélectionner un mode de transmission parmi plusieurs pour une même entité de communication d'un système de télécommunication dit « flexible ». La sélection porte donc sur le mode de transmission le plus adapté pour garantir un débit et une QoS à la distance d.

La demande de brevet WO2011083238 divulgue un procédé de sélection d'un mode parmi plusieurs modes de transmission d'un même dispositif de télécommunication pour délivrer un débit D physique cible avec une QoS à la distance d tout en minimisant la puissance rayonnée. Le procédé détermine une métrique $\alpha$ qui mesure une dégradation relative à la distance d introduite par le support de transmission du signal de communication pour un environnement donné par rapport à un modèle de référence du support de transmission. La dégradation est le résultat d'un effet multi trajets et/ou d'un effet d'atténuation du support de transmission. Le mode sélectionné est celui pour lequel la métrique est minimale. L'utilisation d'une métrique de référence $\alpha$ dont la valeur ne dépend pas directement de la technologie de l'interface de transmission associée au mode de transmission donné permet de comparer entre elles les valeurs obtenues de la métrique $\alpha$ puisque cette métrique a une plage de variation commune aux différents modes de transmission, en particulier quelle que soit la puissance reçue par la deuxième entité.

Ce procédé est donc particulièrement avantageux puisqu'il permet de sélectionner un mode de transmission quelles que soient les technologies mises en oeuvre par les interfaces associées. De manière particulièrement avantageuse, l'expression de la métrique $\alpha$ élimine les composantes spécifiques du signal de communication correspondant à une fréquence porteuse associée à une transmission en particulier de type RF (Radio Frequency, i.e. le signal est transmis dans une bande de fréquence dite radio), optique ou filaire et permet une gamme de variation commune quel que soit le niveau de puissance reçue.

Une entité de communication peut aussi bien être un terminal mobile ou fixe qu'un point d'accès (de tout type) d'un réseau d'accès.

## Exposé de l'invention

L'invention propose une technique permettant d'améliorer la sélection d'un mode de transmission adapté pour garantir le meilleur débit et une qualité de service QoS à une distance d pour une entité de communication comprenant différents modes de transmission en prenant en compte les pertes de trames transmises et les mécanismes de demande de répétition (de type HARQ) intervenant au-delà d'un certain seuil de distance dépendant du mode et des conditions de propagation du signal de communication.

Ainsi, l'invention a pour objet un procédé de sélection d'un mode de transmission, destiné à une première entité de télécommunication comprenant différents modes de transmission, d'un signal de communication destiné à une deuxième entité de télécommunication, chaque mode déterminant un débit physique en bits/s. Le procédé comprend :

- une détermination pour un mode de transmission donné de la valeur d'une première métrique corrigée d'une deuxième métrique, la première métrique mesurant à une distance donnée d une dégradation relative introduite par le support de transmission du signal de communication résultat d'une dégradation relative liée à un effet multi trajets au niveau lien par rapport à un canal gaussien et résultat d'une dégradation relative liée à un effet d'atténuation du support de transmission par rapport à un modèle d'atténuation en espace libre, la deuxième métrique déterminant un rapport entre un débit moyen et le débit physique pour ce même mode de transmission,
- une étape de comparaison pour différents modes de transmission, des valeurs de la première métrique corrigée pour sélectionner au moins un mode de transmission pour une distance d donnée.

L'invention a en outre pour objet une entité de communication comprenant au moins deux modes de transmission différents assurant un débit physique en bits/s.

Ainsi, une entité de communication selon l'invention comprend un calculateur pour déterminer la valeur d'une première métrique $\alpha$ qui mesure une dégradation relative à une distance donnée d introduite par le support de transmission du signal de communication résultat d'une dégradation relative liée à un effet multi trajets au niveau lien par rapport à un canal gaussien et résultat d'une dégradation relative liée à un effet d'atténuation du support de transmission par rapport à un modèle d'atténuation en espace libre, pour un mode de transmission donné,

- un calculateur pour déterminer au moins au-delà d'un seuil de distance la valeur de la première métrique corrigée d'une deuxième métrique déterminant un rapport entre un débit moyen et le débit physique pour un même mode de transmission donné,
- un module de comparaison des valeurs de la première métrique $\alpha$ ou de la première métrique $\alpha$ corrigée $\alpha'$ pour différents modes pour sélectionner au moins un mode de transmission parmi ces modes.

La deuxième métrique v est une mesure normalisée de la perte de débit relative entre le débit physique et le débit moyen à une distance d pour un même mode de transmission.

En corrigeant la métrique $\alpha$ avec cette deuxième métrique v fonction du débit moyen donc du débit réellement disponible au niveau de la trame PPDU, un procédé et une entité de communication selon l'invention tiennent compte de la variation du débit introduite par les pertes de trame et par la mise en oeuvre des mécanismes de répétition de type HARQ (Chase Combining, Incremental Redundancy) tout en garantissant le meilleur débit et une qualité de service QoS à une distance d pour une entité de communication comprenant différents modes de transmission. Compte tenu que le débit moyen commence à s'écarter du débit physique cible au-delà d'un seuil de distance correspondant à une perte notable de trames et à l'introduction des mécanismes de répétition, en-dessous de ce seuil la métrique $\alpha$ ne subit pas ou peu de correction et le procédé conserve les avantages du procédé de sélection basé essentiellement sur cette métrique $\alpha$.

L'utilisation de la métrique $\alpha$ permet plus particulièrement de comparer des modes de transmission associés respectivement à des fréquences porteuses de transmission du signal de communication différentes donc sous-entendu associés à des interfaces de communication différentes, par exemple de type radio, optique ou CPL (Courant Porteur en Ligne ou PLT, Power Line Transmission selon la terminologie anglo-saxonne), en comparant les différentes valeurs de la métrique calculées pour chacun de ces modes. La sélection porte sur les modes de transmission pour lesquels la valeur de la métrique satisfait un critère de seuil.

Selon un mode de réalisation de l'invention le débit moyen $D_{moy}$ est estimé par une relation polynomiale de la forme $D_{moy} = ad^2 + bd + c$ avec a, b et c des coefficients déterminés. Les coefficients sont par exemple déterminés lors de simulations par régression linéaire.

Selon un mode de réalisation de l'invention, seuls sont retenus les modes de transmission pour lesquels la valeur de la métrique satisfait un seuil pour la distance d donnée correspondant généralement à la distance entre la première et la deuxième entités de télécommunication. Ce seuil, au-delà duquel un mode est rejeté, est dynamique et dépend des modes disponibles dans les entités de communication.

Selon un mode de réalisation de l'invention, la première métrique $\alpha$ est le résultat d'une somme pondérée d'une dégradation relative liée à l'effet multi trajets MCM (Marge Canal Multi-trajet) et d'une dégradation relative liée à l'effet d'atténuation du support de transmission MCBE (Marge Canal Bande Etroite). La pondération permet par le choix des valeurs de pondération de limiter les calculs inutiles typiquement dans le cas où seul un des effets, multi trajets ou atténuation du support de transmission, est perceptible compte tenu de l'environnement des deux entités en communication.

Selon un mode de réalisation de l'invention, l'effet multi trajets MCM est déterminé en effectuant la différence entre un seuil de sensibilité multi trajets du mode de transmission et un seuil de sensibilité du mode de transmission, le seuil de sensibilité correspondant à une puissance minimale requise pour assurer un débit D avec un taux d'erreur binaire TEB cible représentatif de la qualité de service QoS sur un support de transmission gaussien. Selon ce mode, la mesure de l'effet multi trajets est simple puisqu'elle résulte de la soustraction de deux valeurs généralement accessibles sous forme de courbes dans la documentation technique associée à une entité ou bien sous forme de tables de qualité préétablies pour chaque mode de transmission disponible dans l'équipement radio.

Selon un mode de réalisation de l'invention, le procédé comprend en outre pour les modes de transmission sélectionnés :

- une étape de détermination de la valeur d'une troisième métrique $\beta$ qui mesure l'excédent de puissance disponible à la distance d, c'est-à-dire la différence entre la puissance disponible à la réception et la puissance minimale requise pour une puissance de rayonnement (PIRE), pour des conditions de propagation, pour un gain d'antenne en réception et pour une QoS donnés et pour le mode de transmission MT considéré,
- un choix d'un mode de transmission pour lequel la troisième métrique $\beta$ franchit un seuil donné.

Selon ce mode, le procédé détermine une troisième métrique $\beta$ qui tient compte de l'excédent de puissance entre la puissance disponible et la puissance requise pour le mode de transmission choisi selon la valeur de $\alpha'$. Ce

mode est particulièrement avantageux puisqu'il permet de contrôler que le mode sélectionné est émis avec une puissance suffisante qui dépasse le seuil de sensibilité multi-trajet de la deuxième entité (réceptrice) avec une marge de puissance ajustée en fonction des conditions de propagation. Le cas selon lequel aucun des modes ne fournit de puissance suffisante pour dépasser le seuil traduit le fait que la deuxième entité (réceptrice) est hors de couverture de la première entité et requiert une puissance rayonnée plus importante. Après la sélection du mode de transmission, le procédé peut ajuster la puissance rayonnée en fonction de l'excédent de puissance mesurée par la troisième métrique $\beta$. Ainsi dans ce cas, le procédé comprend en outre une correction de la puissance de rayonnement (PIRE) pour le mode de transmission choisi au niveau de l'émetteur afin de limiter l'excédent de puissance et de réduire la valeur de la métrique $\beta$.

Selon un mode de réalisation de l'invention, la troisième métrique $\beta$ est corrigée de la deuxième métrique.

Selon un mode de réalisation de l'invention, le procédé consiste à répéter pour différentes distance $d_j$ un procédé de sélection selon l'invention. Ce mode permet de couvrir plusieurs distances.

Selon un mode de réalisation de l'invention, la troisième métrique $\beta$ est calculée selon la relation suivante : $\beta$ = $Gr + PIRE - \alpha - S - PL_{FS}$ (d), dans laquelle PIRE (Puissance Isotropique Rayonnée Equivalente) est la puissance rayonnée en sortie de l'antenne d'émission de l'entité émettrice, Gr, est le gain de l'antenne en réception, S est la puissance minimale requise pour assurer le débit D avec une QoS donnée pour un canal Gaussien, $PL_{FS}(d)$ est l'atténuation de propagation en espace libre.

Selon un mode de réalisation de l'invention, le procédé comprend en outre une étape d'émission d'une trame préambule dédiée qui comprend des séquences dédiées à l'estimation de la première métrique $\alpha$ et/ou de la seconde métrique $\beta$ pour au moins deux modes différents de transmission. Ce mode permet d'obtenir de manière simple la mesure de la dégradation liée à l'effet multi trajets de manière quasi simultanée pour les différents modes de transmission candidats à la sélection.

Selon un mode de réalisation de l'invention, le procédé comprend en outre une mise à jour de la valeur de la première et de la troisième métriques $\alpha$, $\beta$ à partir d'une estimation de la première et de la troisième métriques $\alpha$, $\beta$ effectuée sur les données (champ PSDU) transmises par le signal de communication entre les deux entités. Ce mode de réalisation permet une mise à jour de la valeur des métriques quasi en temps réel puisque effectuée à partir du champ de données d'une trame de données. Cette mise à jour permet de manière particulièrement avantageuse de pouvoir ajuster la sélection d'un mode de transmission aux évolutions de l'environnement. De telles évolutions peuvent intervenir lorsqu'une des entités de télécommunication est en mobilité. Ce mode de réalisation est donc avantageux puisqu'il assure un fonctionnement dynamique au procédé de sélection.

Selon un mode de réalisation de l'invention, un mode de transmission étant associé à une interface de transmission $I_j$, le procédé comprend en outre un déclenchement d'une émission d'une trame préambule dédiée qui comprend des séquences dédiées à l'estimation du support de transmission pour au moins deux interfaces de transmission du système dès que la valeur de la première métrique $\alpha$ mise à jour sort d'un intervalle donné $\alpha_{min} < \alpha j < \alpha_{max}$ et que le mode sélectionné à partir de la troisième métrique $\beta$ mise à jour est associé à une interface de transmission distincte de celle associée au précédent mode sélectionné. En fonction des évolutions de l'environnement, la valeur de la métrique $\alpha$ peut évoluer de manière notable et franchir des valeurs seuils fixées par exemple à l'issue de simulations. La détection de ces franchissements et du changement d'interface déclenche une trame préambule dédiée qui permet d'effectuer une mesure de la métrique pour différents modes et de sélectionner éventuellement un autre mode de transmission. Ce mode de réalisation est donc avantageux puisqu'il assure un fonctionnement dynamique au procédé de sélection et assure une adaptation de la sélection du mode de transmission aux évolutions de l'environnement sans intervention d'un quelconque opérateur.

Selon un mode de réalisation de l'invention, l'entité de communication comprend plusieurs interfaces de transmission, les modes de transmission étant associés à une des interfaces de transmission, telle que les interfaces de transmission appartiennent à une liste comprenant :

- une interface de type PLT (CPL),
- une interface de type radio RF,
- une interface de type optique.

Les différents modes de réalisation précédents peuvent être combinés ou pas avec un ou plusieurs de ces modes pour définir un autre mode de réalisation.

L'invention a en outre pour objet un système de télécommunication à modes de transmission multiples adapté pour la mise en oeuvre d'un procédé selon l'invention.

Ainsi, un système de télécommunication selon l'invention, comprend une entité de communication selon l'invention.

Selon une implémentation préférée, les étapes du procédé de sélection selon l'invention sont déterminées par les instructions d'un programme incorporé dans un circuit électronique telle une puce elle-même pouvant être disposée dans un dispositif électronique tel un point d'accès, une station de base ou un terminal. Le procédé de sélection, selon l'invention peut tout aussi bien être mis en oeuvre lorsque ce programme (ou ses modules) est chargé dans un organe de calcul tel un processeur ou équivalent dont le fonctionnement est alors commandé par l'exécution du programme.

En conséquence, l'invention s'applique également à un programme d'ordinateur (ou ses différents modules), notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

**Liste des figures**

D'autres caractéristiques et avantages de l'invention apparaîtront lors de la description qui suit d'exemples particuliers faite en regard de figures annexées données à titre d'exemples non limitatifs.

La figure 1 est une représentation schématique de la structure d'une trame PPDU de la couche physique de niveau un et de la trame MPDU correspondante de la couche MAC (Media Access Control) de niveau deux, en référence au modèle OSI. Le champ FCS contient les bits dits cyclic Redundancy Check lorsqu'un mécanisme ARQ est mis en place dans le protocole de retransmission des données au niveau MAC.

La figure 2 est un organigramme d'un mode de réalisation particulier d'un procédé de sélection selon l'invention.

La figure 3 est un schéma de la structure simplifiée d'une entité de communication selon l'invention.

La figure 4 représente des courbes de débit moyen en fonction de la distance issues de simulations pour différents mode de transmission d'une entité de communication.

La figure 5 représente les valeurs de la métrique corrigée $\alpha'$ obtenues pour les valeurs de débit moyen correspondant aux courbes de la figure 3 pour la plage de distance 15-50m.

**Description d'un mode de réalisation de l'invention**

Le procédé de sélection selon l'invention exploite la métrique $\alpha$ corrigée d'une métrique v pour comparer les performances obtenues avec les différents modes de transmission tout en tenant compte d'une variation du débit, chaque mode étant associé par définition à une interface de transmission qui peut être identique et/ou différente entre les différents modes.

La métrique $\alpha$ mesure la dégradation relative introduite par le canal de transmission pour une entité de télécommunication donnée dans un environnement donné par rapport à un modèle de référence du support de transmission, en tenant compte d'une part de l'effet multi-trajets et d'autre part de l'atténuation du canal de propagation (PL(d)).

La métrique $\alpha$ pour une distance d est typiquement le résultat en dB d'une somme pondérée d'une dégradation MCM liée à l'effet multi trajets et d'une dégradation MCBE (Marge Canal Bande Etroite) liée à l'effet d'atténuation du support de transmission :

$$\alpha = \eta_1 MCM + \eta_2 MCBE \tag{9}$$

Les coefficients de pondération $\eta_1$ $\eta_2$ ont pour valeur par défaut un.

L'effet multi trajets du canal de propagation impacte les performances au niveau de la couche physique (performances radio) par rapport à une transmission sur un canal dit parfait. L'effet multi trajets se traduit par une dégradation relative qui limite la fiabilité de la liaison pour un mode de transmission donné. La mesure de cette dégradation est obtenue par la différence en dB du seuil de sensibilité multi trajets $S_M$ du mode de transmission donné et du seuil de sensibilité S de ce même mode au même débit. Cette mesure est désignée par le sigle MCM qui signifie "Marge Canal Multi-trajet". Ce paramètre MCM permet de comparer les performances au niveau lien de modes de transmission différents.

Le seuil de sensibilité multi trajets $S_M$ d'un mode de transmission pour un scénario de propagation est la puissance minimale requise pour assurer un débit physique cible de transmission D en bits/s avec un TEB cible (QoS) lorsque le canal de propagation est à trajets multiples. Le seuil de sensibilité multi trajets $S_M$ dépend :

- du rapport signal à bruit requis pour le mode de transmission pour atteindre le débit physique cible $D$ et un TEB cible associé à la QoS (TEB cible typiquement de $10^{-5}$),
- du bruit thermique $P_b$.

Le bruit thermique $P_b$ exprimé en dBm décrit les imperfections des composants des étages RF (Radio Fréquence ou « Radio Frequency » selon la terminologie anglosaxonne) d'une entité de communication. Ce bruit thermique $P_b$ présente des variations très différentes d'un mode de transmission considéré à un autre en fonction de la largeur de bande de transmission, de la température de bruit T du récepteur et de l'efficacité spectrale. Le bruit thermique $P_b$ s'exprime souvent en fonction d'une valeur de référence $P_{b0}$ égale à -114 *dBm* correspondant à une température de bruit de référence $T_0$ fixée à 290 K et à une bande de transmission de 1 MHz. La contribution de bruit thermique est donnée par :

$$P_b = 10 \, \text{Log}(kTB_w) + L_0 = 10 \, \text{Log}(kT_0) + 10 \, \text{Log}(T/T_0) + 10 \, \text{Log}(B_w) + L_0$$

$$P_b = -114dBm + 10 \log_{10}(B_{w\,MHz}) + NF + L_0 \quad (dBm) \tag{1}$$

$$P_b = -114dBm + 10 \log_{10}(D) - 10 \log_{10}(Eff) + NF + L_0 \quad (dBm)$$

$$Eff = D/B_{w\,MHz})$$

avec $T$ la température de bruit de l'entité de communication, $NF$ le facteur de bruit ($10 \log_{10}(T/T_0)$), $B_w$ la bande passante efficace du mode de transmission, $L_0$ les pertes câbles, k la constante de Boltzmann et $Eff$ l'efficacité spectrale du mode de transmission. Le seuil de sensibilité S ne dépend pas de la puissance émise, ni des gains d'antennes.

Le seuil de sensibilité multi trajets $S_M$ dépend du mode de transmission, de la qualité désirée (TEB cible), de la contribution de bruit thermique, du rapport signal à bruit déduit des simulations au niveau lien dans un contexte multi trajets associé à un scénario de propagation, il peut s'exprimer comme suit :

$$\boldsymbol{S_M = SNR + P_b}$$

$$S_M = SNR + kTB_w + L_0 = SNR + 10 \, \text{Log}(kT) + 10 \, \text{Log}(B_w) + L_0$$

$$S_M = SNR + 10 \, \text{Log}(kT_0) + 10 \, \text{Log}(T/T_0) + 10 \, \text{Log}(B_w) + L_0 \tag{2}$$

$$S_M = SNR - 114dBm + NF + 10 \log_{10}(B_{w\,MHz}) + L_0 \quad (dBm)$$

$$SNR_{TEBc=10^{-5}} = \left(\frac{Ebu}{N_0}\right)_{TEBc=10^{-5}} \frac{D}{B_w}$$

En considérant l'équation précédente du $SNR_{TEBc=10^{-5}}$, le seuil de sensibilité multi trajets $S_M$ peut être exprimé en fonction du débit D :

$$SNR_{BER=10^{-5}} = \left(\frac{Ebu}{N_0}\right)_{BER=10^{-5}} \frac{D}{B_w}$$

$$S_M = SNR + kTB_w + L_0 = \left(\frac{Ebu}{N_0}\right) + 10 \, \text{Log}(kT) + 10 \, \text{Log}(D_{Mbps}) + L_0$$

$$S_M = \left(\frac{Ebu}{N_0}\right) + 10 \, \text{Log}(kT_0) + 10 \, \text{Log}(T/T_0) + 10 \, \text{Log}(D_{Mbps}) + L_0 \tag{3}$$

$$S_M = \left(\frac{Ebu}{N_0}\right) - 114dBm + NF + 10 \log_{10}(D_{Mbps}) + L_0 \quad (dBm)$$

Le seuil de sensibilité S d'un mode de transmission correspond à la puissance minimale requise pour assurer le débit physique D, calculé sur le champ de données, avec un TEB cible (TEBc) représentatif de la QoS sur canal Gaussien (canal parfait entaché d'une contribution de bruit AWGN (Additive White Gaussian Noise)) c'est-à-dire sans trajet multiple (typiquement une fonction Dirac). L'expression de S est identique à celle de $S_M$ en utilisant les notations :

$$\left(\frac{Ebu}{N_0}\right)_c^{AWGN} \text{ et } SNR_c^{AWGN}.$$

La marge canal multi trajets *MCM* est une donnée sans dimension qui peut se déduire de plusieurs variables, SNR, *Ebu/$N_0$* ou puissance requise minimale selon les expressions suivantes :

$$MCM = \left(\frac{Ebu}{N_0}\right)_c - \left(\frac{Ebu}{N_0}\right)_c^{AWGN}$$

$$MCM = SNR_c - SNR_c^{AWGN} \tag{4}$$

$$MCM = S_M - S$$

avec (*Ebu/$N_0$*)$_c$ l'énergie moyenne par bit utile divisée par la densité spectrale de bruit qui est requise pour un taux d'erreur binaire cible TEBc, *$SNR_c$* le rapport signal à bruit correspondant et *$S_M$* la puissance minimale requise en réception pour ce même TEBc.

Le paramètre *MCM* correspond à la puissance supplémentaire (ou à la variation du rapport Signal à bruit Δ*SNR* en dB ou à la variation de l'énergie par bit utile divisée par la densité spectrale de bruit Δ*Ebu/$N_0$* en dB), dans un contexte multi trajets, nécessaire pour atteindre un TEB identique au cas Gaussien, pour un mode de transmission donné.

Pour un même TEB et un même mode, la marge canal multi trajets MCM est la différence de SNR obtenu entre respectivement un canal gaussien et un canal multi trajets.

L'effet d'atténuation du canal de propagation dans un contexte multi trajets et en liaison partiellement obstruée ou obstruée introduit une atténuation supplémentaire et entraîne une réduction de la couverture radioélectrique (portée) d'une interface de transmission, en considérant successivement une transmission idéale point à point sans obstruction et une transmission dans un environnement comprenant des obstacles qui obstruent la liaison et augmentent l'atténuation due au canal de propagation. L'atténuation due au canal de propagation modélisée par une équation du type *PL (d)* est une variable physique représentative de l'environnement physique qui se déduit de mesures expérimentales. L'effet d'atténuation relatif du au canal de propagation ne dépend que de l'environnement et du scénario de déploiement (portée, antenne, etc) et ne dépend pas de l'entité de télécommunication à l'exception de l'impact de la fréquence porteuse de transmission dans le calcul de l'atténuation. Un signal émis à une puissance *Pt* est reçu à une distance d avec une puissance *Pr* avec *Pr < Pt*. Le ratio entre *Pt* et *Pr* représente l'atténuation de propagation pour des gains d'antennes égaux à zéro (l'effet des antennes (gains d'antenne *GT* et *Gr*) n'est pas considéré afin de fournir le modèle d'atténuation pour un environnement donné).

Le modèle d'atténuation le plus simple est le modèle en espace libre déduit de l'équation de transmission de Friis connue de l'homme du métier. Ce modèle correspond à l'atténuation lorsqu'aucun obstacle n'obstrue la liaison. La dépendance en distance de l'atténuation varie en $(d/d_0)^2$ où d est la distance entre les deux points de mesures et $d_0$ une distance de référence fixée à 1m en général. La formule de l'équation de transmission de Friis est la suivante :

$$PL_{FS}(d, fc)_{dB} = -27,55 + 20\log(fc_{MHz}) + 20\log(d_m/d_0 = 1m) \tag{5}$$

avec *$d_m$* la distance exprimée en m et *$fc_{MHz}$* la fréquence porteuse exprimée en MHz.

Lorsque la liaison est obstruée ou légèrement obstruée, l'équation de transmission est modifiée et l'atténuation en fonction de la distance est proportionnelle à $(d/d_0)^n$ avec n > 2. La formule modifiée a la forme suivante :

$$PL_{FS}(d, fc)_{dB} = PL_{FS}(d_0, fc)_{dB} + 10 \times n \times \log_{10}(d/d_0) + \sigma \tag{6}$$

$$PL_{FS}(d_0, fc)_{dB} = PL_{FS}(d_0, fc_0)_{dB} + 20 \times \text{Log}(fc/fc_0) \tag{7}$$

avec *$fc_0$* la fréquence de référence, σ l'écart type associés au modèle de propagation.

Le paramètre *MCBE* (Marge Canal Bande Etroite) correspond à l'atténuation supplémentaire entre les deux configurations : espace obstrué et espace libre ; il permet de quantifier l'effet du milieu de transmission sur la sélection d'une interface de transmission. Pour une même distance et un même mode, la marge canal bande étroite *MCBE* est la différence d'atténuation obtenue entre respectivement l'espace libre et l'espace obstrué.

Cet écart MCBE ne dépend plus de la fréquence RF explicitement et permet en conséquence de ne prendre en compte que la dégradation relative du milieu, indépendamment de l'atténuation explicite de la fréquence et des puissances d'émission (le calcul de *MCBE* est fait pour une distance d donnée entre émetteur et récepteur). Le paramètre *MCBE* s'exprime sous la forme suivante :

$$MCBE = PL_{MFS}(d) - PL_{FS}(d) = 10 \times \text{n} \times \log_{10}\left(\frac{d}{d_0}\right) - 10 \times \log_{10}\left(\frac{d}{d_0}\right)^2 + \sigma \tag{8}$$

$$MCBE = 10 \times \text{Log}\left(\left(\frac{d}{d_0}\right)^{n-2}\right) + \sigma$$

Le paramètre MCBE est calculé pour un environnement donné auquel est associé un modèle d'atténuation.

Le paramètre MCM est déterminé pour une QoS cible, typiquement un taux d'erreur binaire cible TEBc (par exempleTEBc=$10^{-5}$).

La métrique $\alpha$ donne bien une mesure d'une dégradation relative introduite par le support de transmission du signal de communication pour un environnement donné par rapport à un modèle de référence du support de transmission, puisque MCM correspond à la puissance supplémentaire nécessaire pour un canal multi trajets par rapport à un canal de référence Gaussien pour atteindre un même TEB et MCBE correspond à l'atténuation supplémentaire obtenue pour un modèle d'atténuation en espace obstrué par rapport à celle obtenue pour un modèle d'atténuation de référence en espace libre.

Des modèles d'atténuation sont connus de l'homme du métier pour chaque environnement.

La métrique v est une sous-métrique normalisée exprimée en dB, sans dimension, qui traduit le rapport entre le débit moyen $D_{moy}$ et le débit $D$ physique pour une distance d donnée :

$$v(d)_{dB} = 10 \cdot \log_{10}\left(\frac{D_{moy}(d)}{D}\right) \tag{10}$$

Elle corrige l'expression de la métrique $\alpha$ du rapport entre le débit moyen $D_{moy}$ et le débit $D$ physique du même mode de transmission : $\alpha' = \alpha - v$ .

Lorsque il n'y a pas de retransmission ni de perte de paquet, la métrique v a une valeur voisine de zéro qui ne modifie pas de manière significative la métrique $\alpha$. La sélection intervient alors sur la seule base de la métrique $\alpha$ tant que la distance d est inférieure à un seuil de distance $d_0$ au-delà duquel la métrique v devient significative. Au-delà du seuil de distance $d_0$ le débit se dégrade ce qui augmente la valeur de $\alpha'$. La prise en compte de la métrique v peut ainsi conduire à éliminer le mode de transmission préalablement sélectionné pour une distance inférieure au seuil $d_0$ et conduire à modifier la décision de sélection. Le seuil $d_0$ de distance à partir duquel un mode se dégrade dépend de ce mode et des conditions de propagation qui induisent une dégradation de la qualité (BER) et le cas échéant une diminution du niveau de puissance reçue *RSSI (Received Signal Strength Indicator)*.

La figure 2 est un organigramme d'un mode de réalisation particulier d'un procédé de sélection selon l'invention.

Pour une distance considérée d et pour chaque mode considéré parmi les différents modes *MODE^i* i = 1, ... N, le procédé 1 comprend la détermination 2 de la valeur de la première métrique $\alpha^i$ corrigée de la deuxième métrique $v^i$ : $\alpha'^i = \alpha^i - v^i$, $v^i$ déterminant le rapport entre le débit moyen $D_{moy}^i$ et le débit $D^i$ physique pour ce même mode de transmission.

Pour la distance considérée d, le procédé 1 comprend en outre la comparaison 3 des valeurs de la première métrique corrigée $\alpha'^i$ obtenues pour les différents modes de transmission considérés *MODE^i* i = 1, ... N pour sélectionner au moins un mode de transmission { *MODE^j*, ...}, $j \in [1, ..., N]$.

Selon un mode de réalisation de l'étape 3 de comparaison, le procédé 1 de sélection effectue un ordonnancement suivant les valeurs croissantes $\alpha'^q \leq \alpha'^p$ ... ou décroissantes $\alpha'^q \geq \alpha'^p$ ..., *p et q* $\in [1, ..., N]$ de la première métrique corrigée pour sélectionner au moins un mode de transmission. Le procédé peut sélectionner les modes { *MODE^j*, ...} pour lesquels la valeur de la première métrique corrigée est minimale avec une gamme de variation de 10%.

Les étapes de détermination 2 et de comparaison 3 sont répétées pour chaque nouvelle valeur considérée de la distance d.

Pour chaque mode de transmission *MODE^i* il existe un seuil $d_0^i$ de distance au-delà duquel le débit moyen $D_{moy}^i$ obtenu avec ce mode s'écarte du débit physique $D^i$ obtenu avec ce même mode.

Lorsque la distance d considérée est inférieure au seuil $d_0^i$ de chacun des modes de transmission *MODE^j*, le procédé de sélection peut déterminer autant de valeurs de la métrique corrigée $\alpha'^i$ que de modes de transmission différents $MODE^j$, $MODE^2$ ..., $MODE^N$.

Lorsque la distance d considérée est supérieure au seuil $d_0^i$ d'un mode de transmission $MODE^i$ ce mode peut être écarté lors de l'étape de comparaison en fonction des valeurs relatives entre les modes considérés de la première métrique corrigée $\alpha'^i$. A minima un mode est écarté lorsque le débit moyen qu'il procure est proche de zéro.

Selon un mode de réalisation, pour le mode de transmission sélectionné ou les différents modes de transmission sélectionnés { $MODE^j$, ... }, le procédé 1 de sélection détermine 4 pour un mode de transmission sélectionné, la valeur d'une troisième métrique $\beta^j$ corrigée de la deuxième métrique $v^j$ : $\beta'^j = \beta^j + v^j$.

La troisième métrique $\beta$ mesure l'excédent de puissance disponible à la distance d, c'est-à-dire la différence entre la puissance disponible et la puissance minimale requise : $\beta = Pa(d) - S_M$. La puissance minimale $S_M$ requise pour assurer un débit de transmission $D$ pour un mode de transmission donné correspond au seuil de sensibilité multi trajets. La puissance disponible $Pa(d)$ dépend de l'environnement considéré, de la puissance rayonnée $PIRE$ à la sortie de l'antenne d'émission et du gain d'antenne en réception.

La valeur de la troisième métrique $\beta$ varie notamment avec la contribution de bruit dans une bande de transmission donnée qui, lorsqu'elle augmente, nécessite une puissance à l'émission plus forte. La puissance disponible $Pa(d)$ doit être au moins égale à la puissance minimale $S_M$ requise pour établir la communication suivant un mode de transmission sélectionné sur la base de la première métrique $\alpha$.

Pour un modèle de propagation multi trajets, Pa(d) est donnée par :

$$Pa(d) = PIRE - PL_{MFS}(d) + Gr \qquad en\ dBm \qquad\qquad (10)$$

avec $Gr$ le gain de l'antenne de réception, $PIRE$ la puissance rayonnée en sortie de l'antenne d'émission de l'entité émettrice donnée par l'expression :

$$PIRE = Pt + Gt \qquad en\ dBm \qquad\qquad (11)$$

avec $Pt$ la puissance en entrée d'antenne d'émission, $Gt$ le gain de l'antenne d'émission.

On a par ailleurs :

$$\alpha = MCM + MCBE = (S_M - S) + \left(PL_{MFS}(d) - PL_{FS}(d)\right),$$

soit :

$$-PL_{MFS}(d) - S_M = -PL_{FS}(d) - \alpha - S,$$

avec $S$ la puissance minimale requise pour assurer le débit physique $D$ pour un canal Gaussien (canal parfait entaché d'une contribution de bruit AWGN).

$$\text{Donc } \beta = Pa(d) - S_M = PIRE - PL_{MFS}(d) - S_M + Gr$$

La troisième métrique $\beta$ peut donc s'exprimer selon la relation suivante :

$$\beta = PIRE - PL_{FS}(d) - \alpha - S + Gr \qquad\qquad (12)$$

Compte tenu que le débit moyen peut varier en fonction de la distance, la troisième métrique $\beta$ est corrigée de la valeur de la deuxième métrique : $\beta' = Pa(d) - S_M + v$

Cette troisième métrique corrigée $\beta$ peut donc s'exprimer selon la relation suivante :

$$\beta' = PIRE - PL_{FS}(d) + Gr - \alpha - S + v$$

$$\beta' = PIRE - PL_{FS}(d) + Gr - (\alpha - v) - S$$

$$\beta' = PIRE - PL_{FS}(d) + Gr - \alpha' - S$$

Ainsi, la puissance disponible Pa(d) doit être au moins égale à la puissance minimale $S_M$ requise à laquelle est ajoutée la perte de puissance due à la diminution du débit, perte traduite par la deuxième métrique pour établir la communication suivant un mode de transmission sélectionné sur la base de la première métrique corrigée $\alpha'$:

$$Pa(d) > S_M - v \text{ soit}: \beta' > 0.$$

La première métrique corrigée $\alpha'$ assure l'atteinte d'une certaine qualité, QoS cible, typiquement un taux d'erreur binaire cible TEBc=10$^{-5}$, pour la délivrance d'un débit à la distance d et la seconde métrique corrigée $\beta'$ permet de contrôler que la puissance disponible à la distance d pour le mode sélectionné est bien suffisante.

Les modes de transmission sélectionnés { $MODE^j$, ... }, $j \in [1, ..., N]$, sur la base de la première métrique corrigée $\alpha'$ pour lesquels la seconde métrique corrigée $\beta'$ est inférieure à zéro sont écartés car ils n'assurent pas une puissance suffisante à la distance d.

Si plusieurs modes {$MODE^k$,...}, $k \in [1, ..., N]$, de transmission conduisent à une seconde métrique corrigée $\beta'$ supérieure à zéro alors le procédé de sélection choisit 6 un mode $MODE^m$, $m \in [1, N]$, parmi ces modes {$MODE^j$,...}.

Le mode choisi $MODE^m$ est celui pour lequel la seconde métrique corrigée est maximale entre deux valeurs $\beta'_{min}$ et $\beta'_{max}$. $\beta'_{min}$ est égale à zéro plus éventuellement une marge de 2/3 dB et $\beta'_{max}$ est de l'ordre de 35 dB. La prise en compte de $\beta'_{max}$ est optionnelle et a pour but de limiter les puissances d'émission et d'améliorer la coexistence entre entités de communication présentes dans la même zone de couverture.

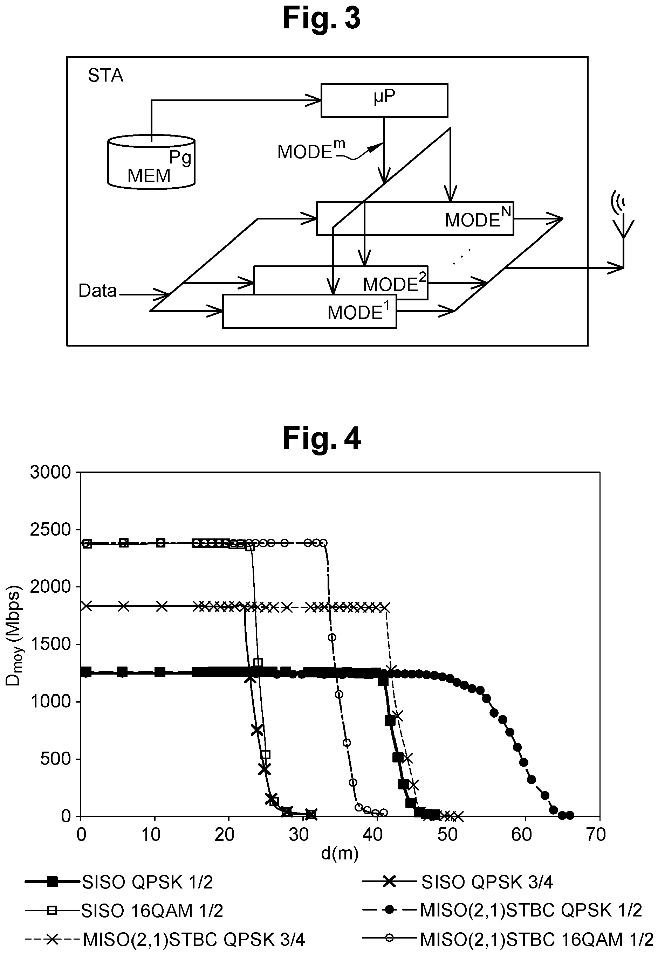

Le procédé de sélection d'un mode de transmission est mis en oeuvre par une entité de communication (point d'accès, station de base, terminal, etc). La structure simplifiée d'une telle entité est décrite ci-après et illustrée par la figure 3.

Cette entité STA comprend plusieurs modes de transmission $MODE^j$, $MODE^2$, ..., $MODE^N$ permettant d'atteindre un certain débit. Chaque mode de transmission est associé à une interface de transmission. L'entité comprend une ou plusieurs interfaces différentes. Lors de l'établissement d'une communication avec une autre entité de communication (point d'accès, station de base, terminal, etc.), le choix d'un mode de transmission commun $MODE^m$ doit être effectué par les entités. Ce choix $MODE^m$ est effectué par l'entité émettrice en mettant en oeuvre en particulier un procédé de sélection selon l'invention.

L'entité STA comprend une mémoire MEM comprenant une mémoire tampon et une unité de traitement $\mu P$ équipée par exemple d'un microprocesseur et pilotée par un programme d'ordinateur Pg pour mettre en oeuvre un procédé de sélection selon l'invention.

A l'initialisation, les instructions de code du programme d'ordinateur Pg sont par exemple chargées dans une mémoire rapide avant d'être exécutées par le processeur de l'unité de traitement $\mu P$.

Le microprocesseur de l'unité de traitement $\mu P$ met en oeuvre un procédé de sélection selon l'invention décrit précédemment, selon les instructions du programme d'ordinateur $Pg$.

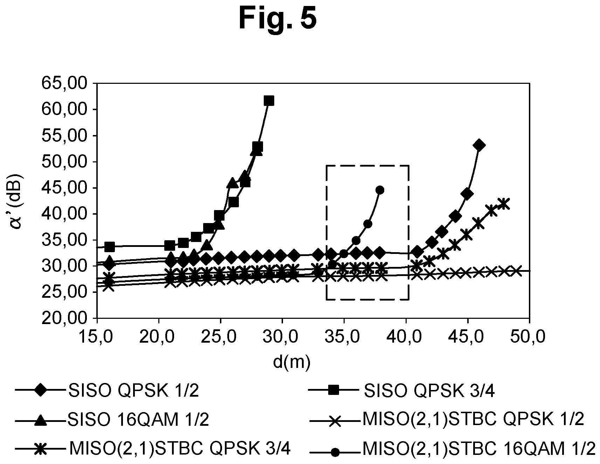

La mise en oeuvre du procédé est illustrée par les figures 4 et 5 issues de simulations.

Le système simulé considéré est mono-technologie. Il comporte une seule interface de transmission de type IEEE 802.11ad qui opère à 60GHz avec une bande passante de 2160MHz. Pour un tel système, on considère une entité de communication (point d'accès, station de base) et un terminal séparés par une distance d. Différents modes de transmission peuvent être sélectionnés pour délivrer un débit cible D.

Selon les simulations, le point d'accès AP envoie suivant un protocole de communication de type CSMA/CA (Carrier Sense Multiple Access with Collision Avoidance) des paquets de données au terminal pendant une durée de simulation $T_{sim}$ avec un mode de transmission donné permettant de délivrer un débit à une distance donnée. La distance d considérée entre les deux dispositifs est variable pour obtenir des valeurs de débit à différentes distances.

A la réception, la puissance reçue est calculée pour la distance d donnée et en fonction des paramètres du modèle de propagation. Cette puissance reçue permet de déterminer un rapport signal sur bruit SNR. La probabilité d'erreur par bit $BER$ et par suite la probabilité d'erreur paquet $PER$ sont déterminées connaissant le SNR et en faisant appel aux tables de qualité prédéfinies pour chaque mode TM (Transmission Mode). Dans le cas où la probabilité d'erreur paquet est nulle, $PER = 0$, tous les paquets transmis sont correctement reçus et le débit fourni est le débit physique cible. Quand la probabilité d'erreur paquet est supérieure à zéro, *PER* > 0, i.e. certains paquets sont erronés ou absents à la réception, des retransmissions sont demandées ce qui introduit des latences et donc une perte de débit.

Ainsi, pour chaque valeur de distance *d*, le débit est calculé en fonction du nombre de paquets correctement reçus ce qui permet de tracer les courbes qui donnent la variation du débit en fonction de la distance d.

Des configurations paramétrables permettent de distinguer différents modes de transmission. Un premier type de configuration repose sur une technique mono-antenne SISO (Single Input Single Output), et un deuxième type de configuration repose sur une technique MISO (2,1) (Multiple Input Single Output). Ce deuxième type de configuration est associé à un codage par bloc espace-temps (STBC, Spatial time block coding selon la terminologie anglosaxonne) utilisant le code Alamouti. Un seul flux spatial est considéré pour ce deuxième type de configuration : les symboles codés sont envoyés sur deux antennes de transmission et reçus par une seule antenne de réception. Ainsi, le débit PPDU sans retransmission ni procédure d'acquittement (débit maximal $D_M$ sur la couche PPDU) ne varie pas entre ces deux types de configuration. Selon l'exemple, ces deux types de configuration sont associés chacun à trois schémas de codage et de modulation (MCS) différents :

| MCS | Modulation | Rendement de codage | $D$ (Mbps) | $D_M$ (Mbps) |
|---|---|---|---|---|
| 15 | QPSK | ½ | 1386 | 1237 |
| 17 | QPSK | ¾ | 2079 | 1822 |
| 18 | 16QAM | ½ | 2772 | 2374 |

pour distinguer selon l'exemple six modes différents, $MODE^j$, $MODE^2$, ..., $MODE^6$, *N* = 6.

Le modèle de propagation utilisé est dit OLOS (Obstruct Line of Sight selon la terminologie anglosaxonne). Ce modèle représente le cas où un obstacle obstrue le trajet principal. Les paramètres pour ce modèle sont les suivants : $d_0$ = distance de référence généralement prise égale à 1 m, $f_c$ = fréquence porteuse, $\sigma$ = écart-type d'une variable aléatoire gaussienne représentant les effets de masque et les variations des pertes dues aux mouvements des obstacles dans le canal de propagation. Les paramètres des pertes dues au modèle de propagation sont rappelés dans le tableau suivant.

| | OLOS |
|---|---|
| $PL_{FS}(d_0, fc)_{dB}$ | 59,83 |
| n | 2,56 |
| $\sigma$ | 5,04 |

La figure 4 représente les valeurs du débit moyen $D_{moy}$ en fonction de la distance d obtenues à l'issue des simulations. Chacun des deux types de configuration est combinés aux trois MCS 15, 16 et 17 pour définir les six modes de transmission différents :

$MODE^i$ = {SISO QPSK ½, SISO QPSK ¾, SISO 16 QAM ½, MISO QPSK ½, MISO QPSK ¾ , MISO 16 QAM ½}.

En dessous d'un seuil de distance $d_0^i$ qui dépend du mode $MODE^j$, le débit moyen est sensiblement constant et sensiblement égale au débit $D_M$ correspondant au débit PPDU sans mécanismes HARQ ni SAW et SR. Le débit PHY est le débit du champ data payload dans le champ PSDU (débit *D* physique). Au-dessus du seuil $d_0^i$ le débit moyen $D_{moy}$ varie.

Pour les modes SISO 16 QAM 1/z et SISO QPSK ¾, le seuil a une valeur comprise entre 20 et 25 m. Pour le mode MISO 16 QAM ½, le seuil a une valeur comprise entre 30 et 35m. Pour les modes SISO QPSK ½ et MISO QPSK ¾, le seuil est égal à environ 40m. Pour le mode MISO QPSK ½, le seuil a une valeur voisine de 50m.

Au moins environ à partir de *d* = 30 *m*, les modes SISO QPSK ¾ et SISO 16 QAM ½ possèdent des débits moyens nuls et conduisent donc à des valeurs invalides de $\alpha'$. Il s'ensuit que pour cette distance et les distances supérieures, la sélection du mode de transmission exclut ces deux modes devenus hors portée radio et compare les modes toujours valides. Au moins environ à partir de *d* = 40 m, le mode MISO 16 QAM 1/z possède un débit moyen nul et conduit donc à une valeur invalide de $\alpha'$. Il s'ensuit que pour au moins cette distance et les distances supérieures, la sélection du mode de transmission exclut ce mode devenu hors portée radio et compare les modes toujours valides.

La figure 5 illustre le changement de sélection d'un mode lorsque la distance dépasse un seuil. Cette figure donne la valeur de la métrique corrigée $\alpha$ - v, dite $\alpha'$, en fonction de la distance. Les valeurs de $\alpha'$ sont obtenues par

les mêmes simulations que celles ayant conduites aux valeurs de débit représentées sur la figure 4.

Compte tenu des valeurs de débit représentées sur la figure 4, le procédé de sélection conduit à sélectionner entre les modes SISO 16 QAM ½ et MISO 16 QAM ½ pour les distances inférieures à environ 25m sur la base de la première métrique $\alpha$. Au-delà de 25m, le mode SISO 16 QAM ½ est invalidé sur la base de la métrique $\alpha$ corrigée compte tenu que le seuil de distance est franchi pour ce mode. Le procédé de sélection selon l'invention basé sur la métrique $\alpha$ corrigée conduit donc à la sélection du mode MISO 16 QAM ½ pour d $\geq$ 25m. Le seuil pour ce mode MISO 16 QAM ½ a une valeur proche de 33m selon l'illustration de la figure 5. Ainsi au-delà de ce seuil, le procédé de sélection selon l'invention basé sur la métrique $\alpha$ corrigée conduit à éliminer ce mode MISO 16 QAM ½ au profit d'un mode avec une valeur inférieure de $\alpha'$ comparativement à celle obtenue pour le mode MISO 16 QAM 1/z. Selon l'illustration, au-delà d'environ 36m, les modes SISO QPSK 1/z, MISO QPSK ¾ et MISO QPSK ½ conduisent à des valeurs de $\alpha'$ inférieures à celle obtenue pour le mode MISO 16 QAM 1/z. Au-delà d'environ 36m, le mode sélectionné fait donc partie d'un de ces trois modes. Le mode MISO QPSK ½ qui conduit à la métrique $\alpha'$ avec la valeur la plus faible est sélectionnée sur la base de cette métrique.

Selon un mode de réalisation reposant sur des simulations et mesures effectives du débit PPDU de l'outil de simulation ns-3, après retransmission de paquets dans un mécanisme HARQ, le débit moyen $D_{moy}$ est approximé par une relation polynomiale de la forme $D_{moy} = ad^2 + bd + c$ avec *a, b et c* des coefficients déterminés lors de simulations par régression linéaire multiple. Le but est d'approximer la fonction $y = f(x)$ représentative d'une mesure par une fonction polynomiale d'ordre 2 décrite par $g(x) = ax^2 + bx + c$. Dans le cadre de l'invention, il s'agit de la mesure du débit $D_{moy}$ du mode de transmission considéré en fonction de chaque point $x$ représentatif d'une distance d émetteur récepteur. Pour ce faire, la méthode d'approximation repose sur la méthode des moindres de carrés où la minimisation de la fonction $Rx = (Y - G(X))^2$ permet de déterminer les coefficients a, b et c de la fonction polynomiale. La minimisation consiste à calculer la dérivée partielle de la fonction $Rx$ pour chacun des coefficients a, b et c à déterminer et considérer l'annulation de ces trois équations aux dérivées partielles. On obtient alors trois équations à trois inconnues (a, b et c) (système de Kramer) résolvables par les méthodes classiques.

$$(Y - G(X))^2 = \sum_{i=1}^{N} \left( y_i - ax_i^2 - bx - c \right)^2$$

$$\frac{\partial}{\partial a}(Y - G(X))^2 = 0$$

$$\frac{\partial}{\partial b}(Y - G(X))^2 = 0$$

$$\frac{\partial}{\partial c}(Y - G(X))^2 = 0$$

## Revendications

1.  Procédé (1) de sélection d'un mode de transmission, destiné à une première entité de télécommunication comprenant différents modes ($MODE^i$) de transmission, d'un signal de communication destiné à une deuxième entité de télécommunication, chaque mode ($MODE^i$) déterminant un débit ($D^i$) physique en bits/s, le débit physique est un débit maximal pour ce mode de transmission, le procédé comprenant les étapes suivantes:

    - une détermination (2) pour un mode de transmission donné ($MODE^i$) de la valeur d'une première métrique ($\alpha^i$) corrigée d'une deuxième métrique ($v^i$), la première métrique ($\alpha^i$) mesurant à une distance donnée d une dégradation relative introduite par le support de transmission du signal de communication résultat d'une dégradation relative liée à un effet multi trajets au niveau lien par rapport à un canal gaussien et résultat d'une dégradation relative liée à un effet d'atténuation du support de transmission par rapport à un modèle d'atténuation en espace libre, la deuxième métrique ($v^i$) déterminant un rapport entre un débit moyen ($D_{moy}^i$) et le débit ($D'$) physique pour ce même mode de transmission, le débit moyen $D_{moy}$ étant la quantité d'information délivrée par le mode de transmission donné durant une période de temps donnée,
    - une étape (3) de comparaison pour différents modes ($MODE^i$ $i = 1, ... N$) de transmission, des valeurs de la première métrique ($\alpha^i$) corrigée pour sélectionner au moins un mode de transmission ({ $MODE^j, ...$ }) pour une distance d donnée.

2. Procédé de sélection d'un mode de transmission selon la revendication 1, dans lequel le débit moyen $D_{moy}$ est estimé par une relation polynomiale de la forme $D_{moy} = ad^2 + bd + c$ avec *a, b et* c des coefficients déterminés.

3. Procédé de sélection d'un mode de transmission selon l'une des revendications précédentes dans lequel la première métrique ($\alpha$) est le résultat d'une somme pondérée d'une dégradation relative liée à l'effet multi trajets et d'une dégradation relative liée à l'effet d'atténuation du support de transmission.

4. Procédé de sélection d'un mode de transmission selon l'une des revendications précédentes, selon lequel pour une distance d inférieure à un seuil de distance ( $d_0^i$ ) la sélection et la comparaison sont faites sur la base de la première métrique ($\alpha$) calculée pour différents modes de transmission déterminant un même débit *D* physique en bits/s.

5. Procédé de sélection d'un mode de transmission selon la revendication 1 selon lequel l'effet multi trajets est déterminé en effectuant la différence entre un seuil de sensibilité multi trajets du mode de transmission et un seuil de sensibilité du mode de transmission, le seuil de sensibilité correspondant à une puissance minimale requise pour assurer le débit D physique avec un taux d'erreur binaire TEB cible représentatif d'une qualité de service QoS sur un support de transmission gaussien.

6. Procédé (1) de sélection d'un mode de transmission selon la revendication 1, comprenant en outre pour les modes de transmission sélectionnés :

   - une étape de détermination de la valeur d'une troisième métrique $\beta$ corrigée de la valeur de la deuxième métrique, cette troisième métrique $\beta$ mesurant l'excédent de puissance disponible à la distance d, c'est-à-dire la différence entre la puissance disponible et la puissance minimale requise,
   - un choix d'un mode de transmission ($MODE^k$) pour lequel la troisième métrique $\beta$ corrigée franchit un seuil donné.

7. Procédé (1) de sélection d'un mode de transmission selon la revendication 6, selon lequel la troisième métrique $\beta$ est calculée selon la relation suivante : $\beta = Gr + PIRE - \alpha - S - PL_{FS}(d)$, dans laquelle PIRE est la puissance rayonnée en sortie de l'antenne d'émission de l'entité émettrice, *Gr,* est le gain de l'antenne en réception, S est la puissance minimale requise pour assurer le débit *D* avec une qualité de service QoS donnée pour un canal Gaussien, $PL_{FS}(d)$ est l'atténuation de propagation en espace libre.

8. Entité de communication comprenant au moins deux modes de transmission différents assurant un débit (*D*) physique en bits/s, le débit physique est un débit maximal pour ce mode de transmission, l'entité comprenant:

   - un calculateur pour déterminer la valeur d'une première métrique $\alpha$ qui mesure une dégradation relative à une distance donnée d introduite par le support de transmission du signal de communication résultat d'une dégradation relative liée à un effet multi trajets au niveau lien par rapport à un canal gaussien et résultat d'une dégradation relative liée à un effet d'atténuation du support de transmission par rapport à un modèle d'atténuation en espace libre, pour un mode de transmission donné,
   - un calculateur pour déterminer au moins au-delà d'un seuil de distance ( $d_0^i$ ) la valeur de la première métrique ($\alpha$) corrigée d'une deuxième métrique (*v*) déterminant un rapport entre un débit moyen ( $D_{moy}^i$ ) et le débit (D) physique pour un même mode de transmission donné, le débit moyen $D_{moy}$ étant la quantité d'information délivrée par le mode de transmission donné durant une période de temps donnée,
   - un module de comparaison des valeurs de la première métrique $\alpha$ ou de la première métrique $\alpha$ corrigée pour différents modes pour sélectionner au moins un mode de transmission parmi ces modes.

9. Entité de communication selon la revendication précédente comprenant plusieurs interfaces de transmission, les modes de transmission étant associés à une des interfaces de transmission, telle que les interfaces de transmission appartiennent à une liste comprenant :

   - une interface de type courant porteur en ligne PLT,

- une interface de type radio,
- une interface de type optique.

10. Programme d'ordinateur sur un support d'informations, ledit programme comportant des instructions de programme adaptées à la mise en oeuvre d'un procédé de sélection d'un mode de transmission selon l'une quelconque des revendications 1 à 7, lorsque ledit programme est chargé et exécuté dans une entité de communication destinée à mettre en oeuvre un procédé de sélection d'un mode de transmission.

11. Support d'informations comportant des instructions de programme adaptées à la mise en oeuvre d'un procédé de sélection d'un mode de transmission selon l'une quelconque des revendications 1 à 7, lorsque ledit programme est chargé et exécuté dans une entité de communication destinée à mettre en oeuvre un procédé de sélection d'un mode de transmission.

**Patentansprüche**

1. Verfahren (1) zur Auswahl eines Übertragungsmodus, bestimmt für eine verschiedene Übertragungsmodi (MODE$^i$) enthaltende erste Telekommunikationsentität, eines für eine zweite Telekommunikationsentität bestimmten Kommunikationssignals, wobei jeder Modus (MODE$^i$) eine physikalische Bitrate (D$^i$) in Bit/s bestimmt, wobei die physikalische Bitrate eine maximale Bitrate für diesen Übertragungsmodus ist, wobei das Verfahren die folgenden Schritte enthält:

   - eine Bestimmung (2) für einen gegebenen Übertragungsmodus (*MODE$^i$*) des Werts einer ersten Metrik ($\alpha^i$) korrigiert um eine zweite Metrik ($v^i$), wobei die erste Metrik ($\alpha^i$) in einem gegebenen Abstand d eine durch den Übertragungsträger des Kommunikationssignals eingeführte relative Verschlechterung misst, die ein Ergebnis einer relativen Verschlechterung verbunden mit einem Mehrwegeffekt im Verbindungsbereich bezüglich eines Gaußschen Kanals und ein Ergebnis einer relativen Verschlechterung verbunden mit einem Dämpfungseffekt des Übertragungsträgers bezüglich eines Dämpfungsmodells im freien Raum ist, wobei die zweite Metrik ($v^i$) ein Verhältnis zwischen einer mittleren Bitrate ( $D_{moy}^i$ ) und der physikalischen Bitrate (D$^i$) für diesen gleichen Übertragungsmodus bestimmt, wobei die mittlere Bitrate $D_{moy}$ die vom gegebenen Übertragungsmodus während einer gegebenen Zeitdauer gelieferte Informationsmenge ist,
   - einen Schritt (3) des Vergleichs für verschiedene Übertragungsmodi (MODE$^i$ i = 1, ... N) der Werte der ersten korrigierten Metrik ($\alpha^i$), um mindestens einen Übertragungsmodus ({MODE$^j$, ...}) für einen gegebenen Abstand d auszuwählen.

2. Verfahren zur Auswahl eines Übertragungsmodus nach Anspruch 1, wobei die mittlere Bitrate $D_{moy}$ durch eine polynomiale Beziehung der Form $D_{moy} = ad^2 + bd + c$ mit a, b und c bestimmten Koeffizienten geschätzt wird.

3. Verfahren zur Auswahl eines Übertragungsmodus nach einem der vorhergehenden Ansprüche, wobei die erste Metrik ($\alpha$) das Ergebnis einer gewichteten Summe einer relativen Verschlechterung verbunden mit dem Mehrwegeffekt und einer relativen Verschlechterung verbunden mit dem Dämpfungseffekt des Übertragungsträgers ist.

4. Verfahren zur Auswahl eines Übertragungsmodus nach einem der vorhergehenden Ansprüche, wobei für einen Abstand d geringer als eine Abstandsschwelle ( $d_0^i$ ) die Auswahl und der Vergleich auf der Basis der berechneten ersten Metrik ($\alpha$) für verschiedene Übertragungsmodi erfolgen, die eine physikalische Bitrate D in Bit/s bestimmen.

5. Verfahren zur Auswahl eines Übertragungsmodus nach Anspruch 1, wobei der Mehrwegeffekt bestimmt wird durch Bilden der Differenz zwischen einer Mehrweg-Empfindlichkeitsschwelle des Übertragungsmodus und einer Empfindlichkeitsschwelle des Übertragungsmodus, wobei die Empfindlichkeitsschwelle einer erforderlichen Mindestleistung entspricht, um die physikalische Bitrate D mit einer binären Ziel-Fehlerhäufigkeit TEB zu gewährleisten, die für eine Dienstqualität QoS auf einem Gaußschen Übertragungsträger repräsentativ ist.

6. Verfahren (1) zur Auswahl eines Übertragungsmodus nach Anspruch 1, das außerdem für die ausgewählten Übertragungsmodi enthält:

- einen Schritt der Bestimmung des Werts einer dritten Metrik β korrigiert um den Wert der zweiten Metrik, wobei diese dritte Metrik β den im Abstand d verfügbaren Leistungsüberschuss misst, d.h. die Differenz zwischen der verfügbaren Leistung und der erforderlichen Mindestleistung,
- eine Wahl eines Übertragungsmodus (MODE$^k$), für den die korrigierte dritte Metrik β eine gegebene Schwelle überschreitet.

**7.** Verfahren (1) zur Auswahl eines Übertragungsmodus nach Anspruch 6, wobei die dritte Metrik β gemäß der folgenden Beziehung β=Gr+PIRE-α-S-PL$_{FS}$(d) berechnet wird, bei der PIRE die am Ausgang der Sendeantenne der Sendeentität ausgestrahlte Leistung ist, Gr die empfangsseitige Verstärkung der Antenne ist, S die erforderliche Mindestleistung ist, um die Bitrate D mit einer gegebenen Dienstqualität QoS für einen Gaußschen Kanal zu gewährleisten, PL$_{FS}$(d) die Ausbreitungsdämpfung im freien Raum ist.

**8.** Kommunikationsentität, die mindestens zwei verschiedene Übertragungsmodi enthält, die eine physikalischen Bitrate (D) in Bit/s gewährleisten, wobei die physikalische Bitrate eine maximale Bitrate für diesen Übertragungsmodus ist, wobei die Entität enthält:

- einen Rechner zur Bestimmung des Werts einer ersten Metrik α, die eine Verschlechterung bezüglich eines gegebenen Abstands d misst, die vom Übertragungsträger des Kommunikationssignals eingeführt wird, die ein Ergebnis einer relativen Verschlechterung verbunden mit einem Mehrwegeffekt im Verbindungsbereich bezüglich eines Gaußschen Kanals und ein Ergebnis einer relativen Verschlechterung verbunden mit einem Dämpfungseffekt des Übertragungsträgers bezüglich eines Dämpfungsmodells im freien Raum für einen gegebenen Übertragungsmodus ist,

- einen Rechner, um mindestens jenseits einer Abstandsschwelle ( $d_0^i$ ) den Wert der ersten Metrik (α) korrigiert um eine zweite Metrik (V) zu bestimmen, der ein Verhältnis zwischen einer mittleren Bitrate ( $D_{moy}^i$ ) und der physikalischen Bitrate (D) für einen gleichen gegebenen Übertragungsmodus bestimmt, wobei die mittlere Bitrate $D_{moy}$ die vom gegebenen Übertragungsmodus während eines gegebenen Zeitraums gelieferte Informationsmenge ist,

- ein Vergleichsmodul der Werte der ersten Metrik α oder der korrigierten ersten Metrik α für verschiedene Modi, um mindestens einen Übertragungsmodus unter diesen Modi auszuwählen.

**9.** Kommunikationsentität nach dem vorhergehenden Anspruch, die mehrere Übertragungsschnittstellen aufweist, wobei die Übertragungsmodi einer der Übertragungsschnittstellen zugeordnet sind, derart, dass die Übertragungsschnittstellen zu einer Liste gehören, die enthält:

- eine Schnittstelle vom Typ Powerline PLT,
- eine Schnittstelle vom Funktyp,
- eine Schnittstelle vom optischen Typ.

**10.** Computerprogramm auf einem Informationsträger, wobei das Programm Programmanweisungen aufweist, die an die Durchführung eines Auswahlverfahrens eines Übertragungsmodus nach einem der Ansprüche 1 bis 7 angepasst sind, wenn das Programm in eine Kommunikationsentität geladen und ausgeführt wird, die dazu bestimmt ist, ein Auswahlverfahren eines Übertragungsmodus durchzuführen.

**11.** Informationsträger, der Programmanweisungen aufweist, die an die Durchführung eines Auswahlverfahrens eines Übertragungsmodus nach einem der Ansprüche 1 bis 7 angepasst sind, wenn das Programm in eine Kommunikationsentität geladen und ausgeführt wird, die dazu bestimmt ist, ein Auswahlverfahren eines Übertragungsmodus durchzuführen.

**Claims**

**1.** Method (1) for selecting a transmission mode, intended for a first telecommunication entity comprising various transmission modes (*MODE$^i$*), for a communication signal intended for a second telecommunication entity, each mode (*MODE$^i$*) determining a physical bitrate (*D$^i$*) in bits/s, the physical bitrate being a maximum bitrate for this transmission mode, the method comprising the following steps:

- determining (2), for a given transmission mode ($MODE^i$), the value of a first metric ($\alpha^i$) corrected by a second metric ($v^i$), the first metric ($\alpha^i$) measuring, at a given distance d, a relative degradation introduced by the transmission medium for the communication signal which is the result of a relative degradation linked to a multipath effect at the link level with respect to a gaussian channel and which is the result of a relative degradation linked to an effect of attenuation of the transmission medium with respect to a model of attenuation in free space, the

second metric ($v^i$) determining a ratio between an average bitrate ($D_{moy}^i$) and the physical bitrate ($D^i$) for this same transmission mode, the average bitrate $D_{moy}$ being the amount of information delivered via the given transmission mode during a given period of time,
- a step (3) of comparing, for various transmission modes ($MODE^i$ $i$ = 1,...N), the values of the corrected first metric ($\alpha^i$) in order to select at least one transmission mode ($\{MODE^j,...\}$) for a given distance d.

2. Method for selecting a transmission mode according to Claim 1, wherein the average bitrate $D_{moy}$ is estimated via a polynomial relationship of the form $D_{moy} = ad^2 + bd + c$, with $\alpha$, b and c being coefficients which are determined.

3. Method for selecting a transmission mode according to one of the preceding claims, wherein the first metric ($\alpha$) is the result of a weighted sum of a relative degradation linked to the multipath effect and of a relative degradation linked to the effect of attenuation of the transmission medium.

4. Method for selecting a transmission mode according to one of the preceding claims, according to which, for a distance d below a distance threshold ($d_0^i$), the selection and the comparison are made on the basis of the first metric ($\alpha$) computed for various transmission modes determining the same physical bitrate D in bits/s.

5. Method for selecting a transmission mode according to Claim 1, according to which the multipath effect is determined by finding the difference between a multipath sensitivity threshold of the transmission mode and a sensitivity threshold of the transmission mode, the sensitivity threshold corresponding to a minimum power required to ensure the physical bitrate $D$ with a target bit error rate TEB which is representative of a quality of service QoS over a gaussian transmission medium.

6. Method (1) for selecting a transmission mode according to Claim 1, further comprising, for the selected transmission modes:

- a step of determining the value of a third metric $\beta$ corrected by the value of the second metric, this third metric $\beta$ measuring the excess power which is available at the distance d, that is to say the difference between the available power and the required minimum power,
- choosing a transmission mode ($MODE^k$) for which the corrected third metric $\beta$ crosses a given threshold.

7. Method (1) for selecting a transmission mode according to Claim 6, according to which the third metric $\beta$ is computed according to the following relationship: $\beta = Gr + PIRE - \alpha - S - PL_{FS}(d)$, in which PIRE is the radiated power at the output of the transmission antenna of the transmitting entity, $Gr$ is the gain of the antenna when receiving, $S$ is the minimum power required to ensure the bitrate $D$ with a given quality of service QoS for a gaussian channel, and $PL_{FS}(d)$ is the attenuation of propagation in free space.

8. Communication entity comprising at least two different transmission modes ensuring a physical bitrate ($D$) in bits/s, the physical bitrate is a maximum bitrate for this transmission mode, the entity comprising:

- a computer for determining the value of a first metric $\alpha$ which measures a relative degradation at a given distance $d$ introduced by the transmission medium for the communication signal which is the result of a relative degradation linked to a multipath effect at the link level with respect to a gaussian channel and which is the result of a relative degradation linked to an effect of attenuation of the transmission medium with respect to a model of attenuation in free space, for a given transmission mode,
- a computer for determining, at least beyond a distance threshold ($d_0^i$), the value of the first metric ($\alpha$)

corrected by a second metric (v) determining a ratio between an average bitrate ($D_{moy}^i$) and the physical bitrate ($D$) for the same given transmission mode, the average bitrate $D_{moy}$ being the amount of information delivered via the given transmission mode during a given period of time,

- a module for comparing the values of the first metric $\alpha$ or of the corrected first metric $\alpha$ for various modes in order to select at least one transmission mode from among these modes.

9. Communication entity according to the preceding claim, comprising several transmission interfaces, the transmission modes being associated with one of the transmission interfaces, such that the transmission interfaces belong to a list comprising:

- a power-line transmission (PLT) interface,
- a radio interface,
- an optical interface.

10. Computer program on an information medium, said program comprising program instructions which are suitable for implementing a method for selecting a transmission mode according to any one of Claims 1 to 7, when said program is loaded into and run in a communication entity intended to implement a method for selecting a transmission mode.

11. Information medium comprising program instructions which are suitable for implementing a method for selecting a transmission mode according to any one of Claims 1 to 7, when said program is loaded into and run in a communication entity intended to implement a method for selecting a transmission mode.

# Fig. 1

| MAC HDR | MSDU | FCS |
|---------|------|-----|

MPDU

| PHY HDR | PSDU | TAIL | PAD |
|---------|------|------|-----|

PPDU

$D^i$, QoS, TEBc
$PL_{FS}(d_0, fc)$

$d = [...]$

$MODE^i \; i = 1,...N$

$\alpha'^i = \alpha^i - \nu^i$  —— 2

$\alpha'^q \leq \alpha'^p ...$
$\alpha'^q \geq \alpha'^p ...$
$p,q \in [1,...,N]$  —— 3

1

$\{MODE^j,...\}$

$\{MODE^j,...\}$

$\beta'^j = Pa(d) - S_M + \nu^j$  —— 4

$\beta'^j > 0$  —— 5

$\{MODE^k,...\}$

$\beta'^m$ max?  —— 6

$MODE^m$

# Fig. 2

# Fig. 3

# Fig. 4

# Fig. 5

**RÉFÉRENCES CITÉES DANS LA DESCRIPTION**

**Documents brevets cités dans la description**

- WO 2011083238 A

**Littérature non-brevet citée dans la description**

- **TANENBAUM, ANDREW S.** Computer Networks

- **A.M. CIPRIANO ; P. GAGNEUR ; G. VIVIER ; S. SEZGINER.** Overview of ARQ and HARQ in beyond 3G. *PIMRC workshop,* 2010